# FASCICULE DE BREVET EUROPEEN

(11) **EP 0 712 758 B1**
(45) Date de publication et mention de la délivrance du brevet: **07.01.1998**
(21) Numéro de dépôt: 95402269.5
(22) Date de dépôt: 11.10.1995
(51) Int. Cl.: B60R 11/02, H04R 1/02

(54) **Réceptacle étanche pour haut-parleur dans un véhicule**
Wasserableitender Behälter für einen Lautsprecher in einem Fahrzeug
Water resistant receptacle for a loudspeaker in a vehicle

(30) Priorité: 16.11.1994 FR 9413820
(43) Date de publication de la demande: 22.05.1996
(73) Titulaire: SOFITEC SA, 78530 Buc (FR)
(72) Inventeur: Proux, Georges, F-78220 Viroflay (FR)
(74) Mandataire: Cabinet Martinet & Lapoux

(56) Documents cités:
- EP-A- 0 313 420
- WO-A-93/14616
- DE-A- 3 220 779
- DE-C- 890 810
- DE-C- 3 817 848
- GB-A- 445 244
- RESEARCH DISCLOSURE, vol. 2244, no. 311, Mars 1990 NEW YORK, page 227 XP 000104502 'Integral Automotive Loudspeaker Driver/Rainshield Assembly'

## Description

La présente invention concerne un réceptacle étanche pour recevoir un haut-parleur encastré dans la carrosserie d'un véhicule, particulièrement dans la portière du véhicule.

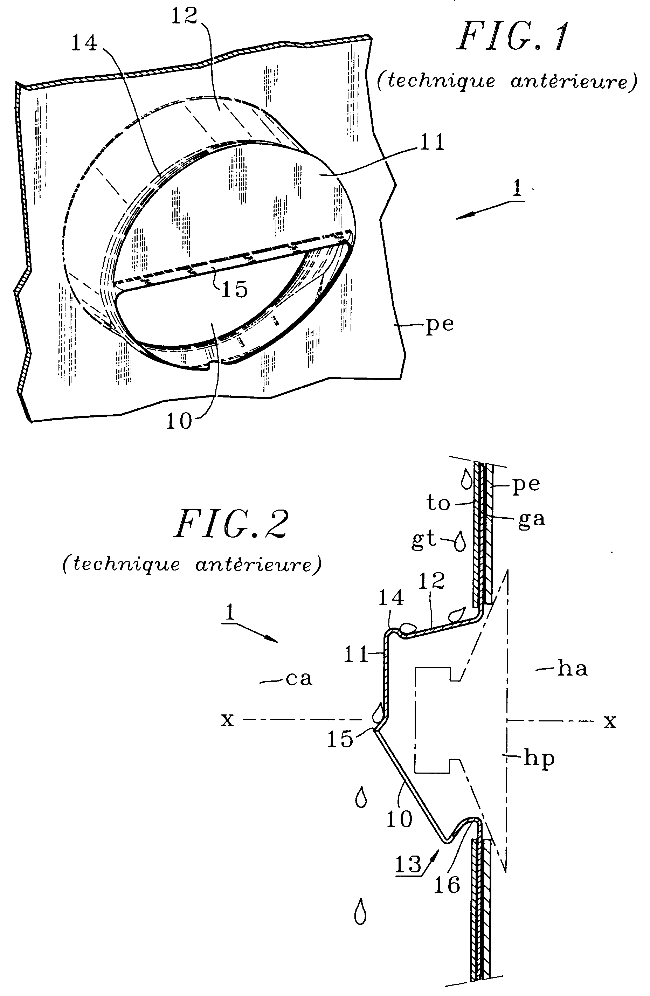

Comme montré en perspective et en coupe axiale verticale aux figures 1 et 2, un réceptacle étanche connu 1 est monolithique avec un panneau d'étanchéité mince pe. Le panneau d'étanchéité pe est tendu sensiblement parallèlement aux coulisses de guidage de la vitre d'une portière du véhicule et est lié à une bordure périphérique intérieure de la portière. Le panneau d'étanchéité pe peut être appliqué contre la face intérieure d'une tôle intérieure to délimitant le caisson ca de la portière et être recouvert par une garniture interne moulée rigide ga, le plus souvent en matière plastique. Le panneau d'étanchéité pe forme un écran vis-à-vis de l'habitacle ha du véhicule contre des gouttelettes de ruissellement gt qui pénètrent dans le caisson ca par les joints de vitre.

Le panneau d'étanchéité pe ainsi que la garniture ga présentent divers bossages, renfoncements et ajours par exemple pour former un accoudoir, un vide-poche et des logements d'accessoires, tels qu'un haut-parleur hp. En particulier, comme montré à la figure 2, un réceptacle 1 du haut-parleur hp avec une forme générale en bol ou chapeau traverse un ajour ménagé dans la tôle intérieure to de la portière et est saillant dans le caisson ca. Une ouverture 10 est pratiquée sous une face verticale 11 du fond du réceptacle 1 de manière à former un évent lors du fonctionnement du haut-parleur.

Selon la réalisation connue montrée aux figures 1 et 2, le réceptacle de haut-parleur 1 comprend une partie supérieure semi-tronconique 12 située sensiblement au-dessus d'un plan horizontal ayant pour trace l'axe x-x du haut-parleur dans la figure 2, et une partie inférieure 13 dont le fond arrière est ouvert en forme de demi-cercle pour former l'évent arrière 10.

Le plan dans lequel est contenu l'évent 10 est incliné par rapport à l'axe x-x du haut-parleur de manière que l'évent soit situé dessous la partie supérieure 12 du réceptacle. Cette condition évite que des gouttelettes gt tombant sur la surface semi-tronconique de la partie supérieure pénètrent dans le réceptacle.

De manière à assurer l'éjection de gouttelettes gt tombant et coulant sur le réceptacle 1, le bord de la face verticale de fond 11 du réceptacle 1 est muni d'un bourrelet semi-circulaire supérieur 14 et d'un bourrelet horizontal 15 sensiblement diamétral au-dessus de l'évent 10. Les gouttelettes gt coulant sur la partie supérieure semi-tronconique 12 sont guidées latéralement au réceptacle par le bourrelet supérieur 14, et les gouttelettes coulant sur la face arrière verticale de fond 11 sont projetées au delà de l'arrière de l'évent 10 grâce au profil concave du bourrelet 15.

En outre, la partie inférieure 13 du réceptacle contenant l'évent 10 forme avec le panneau pe une contre-dépouille inférieure 16, comme illustré à la figure 2. La contre-dépouille favorise la descente de toute gouttelette ou formation de gouttelettes dans la partie basse interne du réceptacle, sous le haut-parleur hp, et ainsi évite la pénétration de telles gouttelettes vers la garniture ga interne à l'habitacle ha.

La forme du réceptacle connu 1 décrit ci-dessus rend difficile le thermoformage du panneau d'étanchéité en raison notamment du bourrelet semi-circulaire supérieur 14 formant un bord saillant à l'arrière du réceptacle et de la contre-dépouille inférieure 16 formant un angle rentrant à l'extérieur du réceptacle.

En outre, la forme du réceptacle connu 1 empêche tout empilage de panneaux identiques pe incluant chacun un tel réceptacle, puisque l'ouverture du réceptacle, du côté habitacle de véhicule ha, par laquelle le haut-parleur hp est encastré, a des dimensions plus petites et un contour différents de ceux de l'ensemble du fond 10, 11 du réceptacle.

L'invention vise à fournir un réceptacle étanche pour haut-parleur qui peut être facilement thermoformable, ce qui réduit le coût de fabrication du panneau, et qui peut être empilable, ce qui réduit les coûts de stockage et de transport.

A cette fin, un réceptacle de haut-parleur pour garnissage d'étanchéité dans la carrosserie d'un véhicule, ayant une ouverture avant par laquelle est introduit le haut-parleur et un fond ajouré, est caractérisé
par une surface sensiblement tronconique entre une grande base dans laquelle est ménagée l'ouverture avant et une petite base formant ledit fond ajouré, et
par un profil transversal sensiblement en denture de la petite base ayant des dents avec des premiers flancs dans lesquels sont pratiquées des lumières, et des seconds flancs formant des déflecteurs de gouttelette.

Grâce à la forme tronconique, ou à toute autre forme analogue à base polygonale, et d'une manière générale grâce à l'absence de tout angle rentrant ou saillie latérale importante sur le contour du réceptacle, les réceptacles selon l'invention sont facilement moulables et plus précisément thermoformables, et sont empilables les uns dans les autres.

Le profil transversal sensiblement en denture de la petite base se prête également bien à un thermoformage, tout en améliorant l'étanchéité de l'intérieur du réceptacle et optimisant les propriétés de reproduction acoustique par le haut-parleur. En effet, les ouvertures sont réparties sur la surface entière de la petite base formant le fond du réceptacle et, comparativement à la technique antérieure, s'étendent au delà de la partie inférieure du fond matérialisée par l'ouverture 10 dans la figure 2.

Selon une réalisation préférée, la surface sensiblement tronconique est composée de deux surfaces tronconiques ayant des angles au sommet différents, de préférence par rapport à un plan sensiblement diamétral aux surfaces tronconiques. La surface tronconique ayant le plus grand angle au sommet est disposée en partie supérieure du réceptacle de manière à présenter une pente prononcée pour les gouttelettes tombant sur le réceptacle. la surface tronconique ayant le plus petit angle au sommet est disposée en partie inférieure du réceptacle. Un petit angle au sommet en partie inférieure permet surtout aux gouttelettes ayant pénétré dans le réceptacle de ne pas s'écouler aussitôt vers l'habitacle. Toutefois, afin de remédier à cet éventuel écoulement vers l'habitacle, la surface sensiblement tronconique peut comprendre une cuvette percée au moins d'un trou. En pratique, la cuvette est située en partie inférieure du réceptacle.

Selon un autre aspect de l'invention, la petite base forme un angle aigu avec la grande base afin que la hauteur en partie supérieure du réceptacle soit supérieure à la hauteur en partie inférieure du réceptacle. D'autre part, la petite base est placée en retrait d'une visière située en partie supérieure du réceptacle et formant la bordure périphérique supérieure du fond du réceptacle. Ces caractéristiques permettent ainsi aux gouttelettes qui tombent sur la partie supérieure du réceptacle de ne pas s'écouler le long de la face arrière du réceptacle et ainsi ne pas générer d'humidité à l'intérieur du réceptacle à travers les lumières.

Selon une réalisation préférée, la denture est de préférence dissymétrique et sensiblement triangulaire, les premiers flancs dans lesquels sont pratiquées les lumières formant des évents longilignes sont étroits, et les seconds flancs formant les déflecteurs de gouttelette sont plus larges que les premiers flancs. Lors de l'installation du réceptacle dans le caisson, les déflecteurs et lumières sont superposés horizontalement et les lumières et déflecteurs sont dirigés vers le bas, comme des persiennes. Les ouvertures sont ainsi en retrait de la face arrière du réceptacle et pratiquement aucune gouttelette ne peut pénétrer par ces lumières. Les déflecteurs de préférence plus larges que les lumières ont une pente très prononcée de manière à accélérer l'évacuation d'éventuelles gouttelettes qui viendraient tomber sur la face arrière du réceptacle.

De manière à éviter encore tout risque de pénétration de gouttelette par les lumières, une face arrière de l'une de bordures longitudinales des déflecteurs est concave.

Des barrettes de renfort peuvent être disposées transversalement aux lumières afin de rigidifier la face arrière du réceptacle lorsque celui-ci est particulièrement fabriqué dans une matière relativement souple.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'un panneau d'étanchéité incluant un réceptacle pour haut-parleur selon la technique antérieure commentée ci-dessus ;
- la figure 2 est une vue en coupe axiale verticale du réceptacle selon la figure 1, appliquée contre et traversant la tôle interne d'un caisson de portière de véhicule ;
- la figure 3 est une vue en perspective d'un panneau d'étanchéité incluant un réceptacle pour haut-parleur selon une réalisation préférée de l'invention ;
- la figure 4 est une vue arrière du réceptacle montré à la figure 3, muni de barrettes de renfort ; et
- la figure 5 est une vue en coupe verticale du réceptacle montré à la figure 3 prise le long de la ligne Y-Y dans la figure 4, appliqué contre et traversant la tôle intérieure d'un caisson de portière de véhicule.

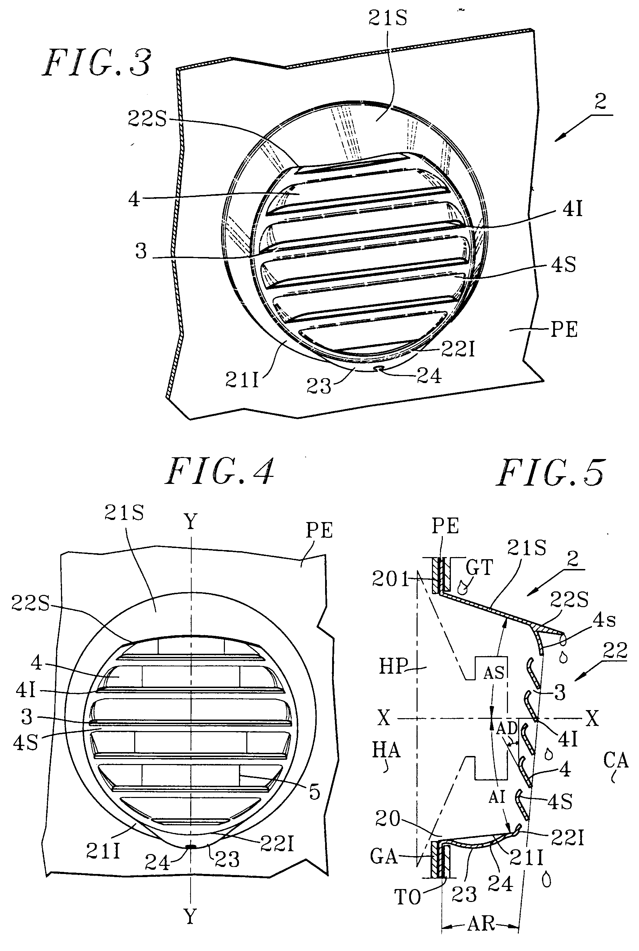

En référence aux figures 3 à 5, un réceptacle étanche 2 pour un haut-parleur HP dans un véhicule a une forme sensiblement tronconique autour d'un axe horizontal X-X perpendiculaire à la tôle intérieure TO du véhicule telle que celle d'un caisson de portière CA, à laquelle est assujetti directement ou indirectement le réceptacle.

Du côté de l'habitacle HA du véhicule, le réceptacle 2 comprend une ouverture circulaire 2O pratiquée dans une grande base sensiblement circulaire 201. Selon la réalisation illustrée, le réceptacle 2 est monolithique avec un panneau de garnissage d'étanchéité PE. L'ouverture 20 est alignée avec une ouverture similaire ménagée dans une garniture moulée rigide GA. La garniture GA recouvre le panneau d'étanchéité PE devant la tôle TO et constitue un revêtement interne d'habillage de l'habitacle.

Le panneau d'étanchéité PE est un panneau thermoformable qui peut être constitué par une feuille en mousse de polymère. Selon une autre variante, le panneau d'étanchéité PE est un panneau composite comprenant une feuille en mousse de polymère et un film polymère étanche à l'eau, accolé sur la feuille. Le film est de préférence disposé vers l'extérieur du réceptacle et donc orienté vers l'intérieur du caisson CA du véhicule en regard de la vitre descendant dans le caisson ; la feuille de mousse de polymère est alors disposée à l'intérieur du réceptacle et en regard de la garniture GA interne à l'habitacle HA du véhicule. Le film polymère et la mousse de polymère sont accolés l'un à l'autre et sont de préférence ignifuges. Un tel panneau est de l'un des types décrits dans la demande de brevet français FR-A-2 698 152 déposée par le demandeur. De préférence, de manière à améliorer l'insonorisation du véhicule et particulièrement de l'enceinte formée par le réceptacle 2 entourant le haut-parleur, l'une des faces de la feuille de mousse comporte un réseau régulier d'isolation acoustique d'évidements et de saillies alternés, pour constituer un panneau composite étanche et isolant acoustiquement selon l'un des types décrits dans la demande de brevet français FR-A-2 698 151 également déposée par le demandeur.

Le réceptacle 2 est symétrique par rapport à un axe vertical Y-Y. Il présente une surface sensiblement tronconique lisse 21S-21I qui s'étend entre la grande base 2O1 et une petite base ajourée 22 formant le fond du réceptacle. La surface sensiblement tronconique est composée de deux surfaces tronconiques supérieure et inférieure 22S et 22I qui sont jointives dans un plan horizontal de préférence coplanaire avec l'axe X-X du haut-parleur. L'inclinaison de la surface tronconique supérieure 21S par rapport à l'axe horizontal X-X est plus prononcée que celle de la partie inférieure 21I qui peut être sensiblement orthogonale à la grande base 201 du réceptacle. En d'autres termes, le demi-angle au sommet AS de la surface tronconique supérieure 22S est plus grand que le demi-angle au sommet AI de la surface tronconique inférieure 22I, bien que selon une autre variante, les demi-angles au sommet AI et AS sont égaux.

L'inclinaison plus grande de la partie supérieure 21S de la surface sensiblement tronconique favorise la descente de gouttelettes de ruissellement GT depuis la tôle intérieure de caisson TO vers l'intérieur du caisson CA, de manière à contourner le haut-parleur HP logé dans le réceptacle. La partie inférieure 21I de la surface tronconique forme un angle obtus avec la grande base 2O du réceptacle qui peut être sensiblement un angle droit, l'angle AI étant alors voisin de zéro, de manière à préserver la possibilité d'un emboîtement les uns dans les autres de réceptacles identiques et par conséquent un empilement de panneaux incluant ces réceptacles.

Dans le bas de la partie inférieure 21I est ménagée une petite cuvette 23 qui recueille éventuellement des goutelettes ayant pénétré à travers la face arrière ajourée 22. Les goutelettes ainsi recueillies peuvent s'écouler dans le caisson CA à travers un ou plusieurs trous 24 situés sensiblement au fond de la cuvette 23.

La face arrière 22 a une forme générale circulaire autour de l'axe X-X du haut-parleur et du réceptacle et est légèrement inclinée vers le bas avec un angle aigu AR de quelques degrés par rapport à la grande base 201. Comme montré à la figure 5, une bordure périphérique supérieure 22S de la face arrière 22 forme une visière s'étendant sensiblement semi-circulairement au-dessus de l'axe X-X et est ainsi plus déportée dans le caisson CA que le bord inférieur 22I de la face arrière 22 pour que les gouttelettes GT coulant sur la partie supérieure 21S de la surface tronconique tombent directement devant la face arrière ajourée 22 qui est en retrait de la visière supérieure 22S.

Comme montré en détail dans la figure 5, la face arrière 22 présente en coupe transversale verticale un profil sensiblement en denture. Des lumières minces 3 s'étendent horizontalement suivant des cordes du contour sensiblement circulaire de la face arrière 22 et constituent des premiers flancs de dents du profil sensiblement en denture. Selon la réalisation illustrée dans les figures 3 à 5, six lumières étroites sensiblement trapézoïdales 3 de largeur égale sont prévues et ont des longueurs décroissantes depuis l'axe diamétral X-X vers le haut et le bas. Les lumières 3 servent d'évents arrière à l'enceinte du haut-parleur formé par le réceptacle 2 de manière à contribuer à la diminution de la fréquence de résonance basse du haut-parleur HP et augmenter le rendement de celui-ci dans les fréquences basses.

Les lumières 3 sont délimitées par des déflecteurs parallèles horizontaux 4 qui constituent des seconds flancs des dents du profil sensiblement en denture. Les déflecteurs sont très inclinés avec un angle aigu AD sensiblement compris entre 30 et 45 degrés par rapport à la petite base arrière 22. Selon la réalisation illustrée, un déflecteur 4s formant la bordure supérieure convexe de la petite base arrière 22 et cinq déflecteurs 4 avec un profil vertical identique sont superposés et équirépartis verticalement. Chaque déflecteur 4 présente une bordure longitudinale rectiligne supérieure horizontale 4S, en forme de gouttière, dont la face arrière orientée vers le caisson CA est coudée concave. L'autre bordure longitudinale rectiligne inférieure 4I du déflecteur est plate, ou sensiblement convexe, et délimite avec la bordure concave 4S du déflecteur 4 immédiatement suivant en dessous l'une des lumières 3. Dans ces conditions, comme montré à la figure 5, les lumières 3 sont orientées vers le bas, ce qui empêche toute pénétration de gouttelettes vers l'intérieur du réceptacle. La pénétration des gouttelettes vers l'intérieur du réceptacle 2 où est logé le haut-parleur HP est d'autant plus entravée que la largeur des lumières 3 est petite. Selon la réalisation illustrée, le profil dentelé de la petite base arrière 22 est sensiblement triangulaire rectangle dissymétrique ; les dents ont des flancs étroits constitués par les lumières 3 et les bordures supérieures de déflecteur 4S, et des flancs larges constitués par les déflecteurs 4, par exemple deux fois plus larges que les lumières.

La somme des surfaces des lumières 3 est comparable à la surface de l'évent unique 10 du réceptacle 1 selon la technique antérieure montrée aux figures 1 et 2, si bien que les qualités acoustiques du réceptacle 2 sont sensiblement améliorées. En pratique, la somme des surfaces des lumières 3 est de l'ordre de 30 à 50 % de la surface hors-tout de la face arrière circulaire 22 du réceptacle.

En variante, comme montré à la figure 4, les lumières 3 peuvent comporter des petites barrettes de renfort verticales 5 s'étendant suivant le sens de la largeur des lumières 3 entre deux déflecteurs 4. Les barrettes de renfort 5 sont monolithiques, tout comme les déflecteurs 4, avec l'ensemble du réceptacle 2. La disposition et le nombre des barrettes de renfort 5 sont sélectionnés pour rigidifier le réceptacle et éviter un affaissement du réceptacle sous le poids de l'eau s'écoulant lorsque la matière du réceptacle est relativement souple.

Bien que l'invention ait été décrite pour un réceptacle 2 monolithique avec le panneau d'étanchéité PE, un réceptacle fabriqué de manière séparée du panneau d'étanchéité et rapporté dans un ajour prévu à cet effet dans le panneau entre également dans le cadre de l'invention. Dans ce cas, la périphérie de la grande base 201 constitue un appui du réceptacle contre le panneau d'étanchéité et l'appui est fixé sur le panneau par thermocollage ou tout autre moyen analogue.

Selon d'autres variantes, au lieu d'être circulaire, la section des petite et grande bases peut être elliptique, carrée, rectangulaire et plus généralement polygonale. Dans la suite, le mot "tronconique" doit être compris comme également sensiblement "pyramidal" ou sensiblement "prismatique" régulier. En outre, au lieu que la surface 21S-21I soit sensiblement un tronc de cône droit, celle-ci peut être un tronc d'un cône oblique, de sorte que le centre de la petite base 22 soit décentré, de préférence vers le bas dans la figure 5, par rapport à l'axe X-X de la grande base 20.

## Revendications

1. Réceptacle de haut-parleur pour garnissage d'étanchéité dans la carrosserie d'un véhicule, ayant une ouverture avant par laquelle peut être introduit un haut-parleur (HP) par sa face arrière et un fond ajouré, situé en arrière de la Face arrière du haut-parleur (HP)une Fois celui-ci monté caractérisé
par une surface sensiblement tronconique, pyramidale ou prismatique régulière (21S-21I) entre une grande base (201) dans laquelle est ménagée l'ouverture avant (20) et une petite base (22) formant ledit fond ajouré, et
par un profil transversal sensiblement en denture de la petite base (22) ayant des dents avec des premiers flancs dans lesquels sont pratiquées des lumières (3) et des seconds flancs formant des déflecteurs de gouttelette (4).

2. Réceptacle de haut-parleur conforme à la revendication 1, dans lequel la surface sensiblement tronconique, pyramidale ou prismatique régulière est composée de deux surfaces tronconiques, pyramidales ou prismatiques regulières (22S, 22I) ayant des angles au sommet différents (AS, AI), de préférence par rapport à un plan sensiblement diamétral (X-X) aux surfaces tronconiques, pyramidales ou prismatiques regulières.

3. Réceptacle de haut-parleur conforme à la revendication 1 ou 2, dans lequel la surface sensiblement tronconique, pyramidale ou prismatique régulière (21S-21I) comprend une cuvette (23) percée au moins d'un trou (24).

4. Réceptacle de haut-parleur conforme à l'une quelconque des revendications 1 à 3, dans lequel la petite base (22) forme un angle aigu (AR) avec la grande base (201).

5. Réceptacle de haut-parleur conforme à l'une quelconque des revendications 1 à 4, comprenant une bordure périphérique (22S) formant visière par rapport à laquelle la petite base (22) est en retrait.

6. Réceptacle de haut-parleur conforme à l'une quelconque des revendications 1 à 5, dans lequel la denture est dissymétrique et sensiblement triangulaire, les premiers flancs dans lesquels sont pratiquées les lumières (3) sont étroits, et les seconds flancs formant les déflecteurs de gouttelette (4) sont plus larges que les premiers flancs.

7. Réceptacle de haut-parleur conforme à l'une quelconque des revendications 1 à 6, dans lequel une face arrière de l'une (4S) de bordures longitudinales des déflecteurs (4) est concave.

8. Réceptacle de haut-parleur conforme à l'une quelconque des revendications 1 à 7, comprenant des barrettes de renfort (5) transversalement aux lumières (3).

9. Réceptacle de haut-parleur conforme à l'une quelconque des revendications 1 à 8, caractérisé en ce qu'il est thermoformable.

10. Réceptacle de haut-parleur conforme à l'une quelconque des revendications 1 à 9, caractérisé en ce qu'il est en une feuille en mousse de polymère thermoformable.

11. Réceptacle de haut-parleur conforme à l'une quelconque des revendications 1 à 9, caractérisé en ce qu'il est composé au moins d'un film polymère étanche à l'eau et d'une feuille en mousse de polymère accolés l'un à l'autre et tous deux thermoformables.

12. Réceptacle de haut-parleur conforme à la revendication 10 ou 11, dans lequel l'une des faces de la feuille de mousse comporte un réseau régulier d'isolation acoustique d'évidements et de saillies alternés.

## Claims

1. Loudspeaker housing for water-resistant fitting in the bodywork of a vehicle, having a front opening through which a loudspeaker (HP) can be inserted by its rear side and a perforated base located behind the rear side of the loudspeaker (HP) once the latter has been fitted, characterised by a regular, substantially frustoconical, pyramidal or prismatic surface (21S-21I) between a large base (201) in which is formed the front opening (20) and a small base (22) forming said perforated base, and by a substantially serrated transverse profile of the small base (22), having serrations with first flanks in which apertures (3) are formed and second flanks forming droplet deflectors (4).

2. Loudspeaker housing according to claim 1, wherein the regular, substantially frustoconical, pyramidal or prismatic surface is made up of two regular, substantially frustoconical, pyramidal or prismatic surfaces (22S, 22I) having different vertex angles (AS, AI), preferably in relation to a plane which is substantially diametric (X-X) with respect to the regular, substantially frustoconical, pyramidal or prismatic surfaces.

3. Loudspeaker housing according to claim 1 or 2, wherein the regular, substantially frustoconical, pyramidal or prismatic surface (21S-21I) comprises a depression (23) drilled with at least one hole (24).

4. Loudspeaker housing according to any one of claims 1 to 3, wherein the small base (22) forms an acute angle (AR) with the large base (201).

5. Loudspeaker housing according to any one of claims 1 to 4, comprising a peripheral border (22S) which forms a peak relative to which the small base (22) is recessed.

6. Loudspeaker housing according to any one of claims 1 to 5, wherein the serrations are asymmetrical and substantially triangular, the first flanks in which the apertures (3) are provided are narrow and the second flanks forming the droplet deflectors (4) are wider than the first flanks.

7. Loudspeaker housing according to any one of claims 1 to 6, wherein a rear side of one (4S) of the longitudinal borders of the deflectors (4) is concave.

8. Loudspeaker housing according to any one of claims 1 to 7, comprising reinforcing bars (5) running at right angles to the apertures (3).

9. Loudspeaker housing according to any one of claims 1 to 8, characterised in that it is thermoformable.

10. Loudspeaker housing according to any one of claims 1 to 9, characterised in that it is made of a sheet of thermoformable polymer foam.

11. Loudspeaker housing according to any one of claims 1 to 9, characterised in that it is made up of at least one water-resistant polymer film and a sheet of polymer foam attached to one another, both being thermoformable.

12. Loudspeaker housing according to claim 10 or 11, wherein one of the sides of the sheet of foam has a regular pattern for acoustic insulation consisting of alternate recesses and projections.

## Patentansprüche

1. Lautsprechergehäuse für die Abdichtungsauskleidung in der Karosserie eines Fahrzeuges mit einer vorderen Öffnung, durch die ein Lautsprecher (HP) mit seiner Hinterseite eingeführt werden kann und einem durchbrochenen Boden, der sich hinter der Hinterseite des Lautsprechers (HP) befindet, wenn dieser montiert ist, gekennzeichnet
durch eine Oberfläche im wesentlichen in Form eines Kegelstumpfes, einer Pyramide oder eines regelmäßigen Prismas (21S-21I) zwischen einer großen Basis (201), in der die vordere Öffnung (20) ausgebildet ist, und einer kleinen Basis (22), die den genannten durchbrochenen Boden bildet, und
durch ein im wesentlichen zahnungsförmiges Querprofil der kleinen Basis (22), die Zähne mit ersten Flanken aufweist, in denen Durchbrechungen (3) ausgebildet sind, und zweiten Flanken, die Tröpfchenablenker (4) bilden.

2. Lautsprechergehäuse nach Patentanspruch 1, bei dem die Oberfläche im wesentlichen in Form eines Kegelstumpfes, einer Pyramide oder eines regelmäßigen Prismas aus zwei Oberflächen in Form eines Kegelstumpfes, einer Pyramide oder eines regelmäßigen Prismas (22S, 22I) besteht, die unterschiedliche Kegelwinkel (AS, AI), vorzugsweise relativ zu einer zu den Oberflächen in Form eines Kegelstumpfes, einer Pyramide oder eines regelmäßigen Prismas im wesentlichen diametralen Ebene (X-X), haben.

3. Lautsprechergehäuse nach Patentanspruch 1 oder 2, bei dem die Oberfläche im wesentlichen in Form eines Kegelstumpfes, einer Pyramide oder eines regelmäßigen Prismas (21S-21I) eine Mulde (23) mit mindestens einem Loch (24) umfaßt.

4. Lautsprechergehäuse nach irgendeinem der Patentansprüche 1 bis 3, bei dem die kleine Basis (22) mit der großen Basis (201) einen spitzen Winkel (AR) bildet.

5. Lautsprechergehäuse nach irgendeinem der Patentansprüche 1 bis 4, einen peripheren Rand (22S) umfassend, der einen Abdeckschirm bildet, relativ zu dem die kleine Basis (22) zurücksteht.

6. Lautsprechergehäuse nach irgendeinem der Patentansprüche 1 bis 5, in dem die Zahnung unsymmetrisch und im wesentlichen dreieckig ist, wobei die ersten Flanken, in denen die Durchbrechungen (3) ausgebildet sind, schmal sind, und die zweiten Flanken, die Tröpfchenablenker bilden, breiter sind, als die ersten Flanken.

7. Lautsprechergehäuse nach irgendeinem der Patentansprüche 1 bis 6, in dem eine hintere Seite eines (4S) der Längsränder der Ablenker (4) konkav ist.

8. Lautsprechergehäuse nach irgendeinem der Patentansprüche 1 bis 7, das quer zu den Durchbrechungen (3) Verstärkungsstege (5) umfaßt.

9. Lautsprechergehäuse nach irgendeinem der Patentansprüche 1 bis 8, dadurch gekennzeichnet, daß es warmformbar ist.

10. Lautsprechergehäuse nach irgendeinem der Patentansprüche 1 bis 9, dadurch gekennzeichnet, daß es aus einer Folie aus warmformbarem Polymerschaum besteht.

11. Lautsprechergehäuse nach irgendeinem der Patentansprüche 1 bis 9, dadurch gekennzeichnet, daß es aus mindestens einem wasserdichten Polymerfilm und einer Folie aus Polymerschaum besteht, die aneinandergefügt sind und beide warmformbar sind.

12. Lautsprechergehäuse nach Patentanspruch 10 oder 11, in dem eine der Seiten der Schaumfolie ein regelmäßiges Gitter aus abwechselnden Vertiefungen und Vorsprüngen zur akustischen Isolierung aufweist.
